# EUROPEAN PATENT APPLICATION

(11) **EP 4 549 406 A1**
(43) Date of publication of application: **07.05.2025**
(21) Application number: 23207463.3
(22) Date of filing: 02.11.2023
(51) Int. Cl.: C02F 1/44, F04B 5/02, F03B 13/14, F03B 13/20, B01D 61/06, C02F 103/08, F03B 13/16, F04B 9/105, F03B 13/18

(54) **A WAVE-POWERED DESALINATOR SYSTEM**

(71) Applicant: van Leggelo, Bernard, 98000 Monaco (MC); Tillotson, Robert Howard, St. Pauls (AG)
(72) Inventor: van Leggelo, Bernard, 98000 Monaco (MC); Tillotson, Robert Howard, St. Pauls (AG)
(74) Representative: Meissner Bolte Partnerschaft mbB

(57) **Abstract**

The present invention discloses a wave-powered desalinator system (100) for desalinating seawater. The desalinator system (100) comprises, at least a wave-powered pump (102), a pressure intensifier unit (106) connected downstream of the wave-powered pump (102), and a reverse osmosis (RO) membrane unit (108) connected downstream of an outlet (110) of the pressure intensifier unit (106). The RO membrane unit (108) is configured to convert incoming high-pressure seawater into a desalinated water stream (DW) and high-pressure brine. The pressure intensifier unit (106) is configured to utilize the high-pressure brine supplied by RO membrane unit (108) to increase the pressure of seawater in the pressure intensifier unit (106) and discharge a low-pressure brine. The wave-powered pump (102) comprises a pump plunger (118), a pump barrel (120) and a float (122).

## Description

### FIELD

The present disclosure relates to the field of desalinators. More particularly, the present disclosure relates to a wave-powered desalinator system.

### DEFINITIONS

As used in the present disclosure, the following terms are generally intended to have the meaning as set forth below, except to the extent that the context in which they are used indicate otherwise.

Osmosis: The expression 'osmosis used in the context of this disclosure refers to but not limited to; osmosis is a net movement of a solution with less concentration through a membrane into a solution with a higher concentration. Only a few molecules of dissolved salts, organics, bacteria and pyrogens are allowed to pass through the semi-permeable membrane.

### BACKGROUND

The background information herein below relates to the present disclosure but is not necessarily prior art.

Water covers 70 % of the earth's surface. Even though a large portion of the earth is covered by water, there is a severe scarcity of drinking water in most of countries across the world, as the majority of the water is in the form of saline sea water.

Conventionally, the desalination technique is used to convert the saline seawater into usable water. Reverse osmosis is well known desalination technique conventionally used to obtain clean drinkable water.

Reverse osmosis is the process in which a feed water like saline seawater is pressurised through the semi-permeable membrane. Water molecules that pass through the membrane are called as permeate water. Majority of salts, organics, bacteria and pyrogens are restricted to pass through the membrane and are discharged through the reject stream, which is called as brine stream.

Generally, reverse osmosis RO desalination plants are installed on a land. The desalination rate of these land-based RO desalination plants is 35 % to 45 %. In order to achieve these desalination rates, a pre-treatment needs to be applied to the seawater, to remove particulates, debris, microorganism, suspended solids and slit from the source seawater before reverse osmosis desalination. The pre-treatment includes the addition of various chemicals in the seawater. This pre-treatment process increases overall cost of desalination. For lower recovery, rates pre-treatment may not be required.

Further, these desalination plants are located far from the seashore, so the seawater needs to be pumped from offshore to the RO plant through pipes.

The land-based RO plant includes a pump used to increase the pressure of the fluid supplied to RO membrane. But the pump consumes high electrical energy, which increases the cost of the desalination.

Convention land-based RO plant comprises an energy recovery device/a pressure intensifier. Various types of energy recovery devices exist in the market. One of such well-known pressure intensifiers is a Clark pump. However, such pressure intensifiers have complex construction, may not be suitable for larger commercial system. Further, it requires multiple steps for carrying out routine maintenance, making maintenance lengthy.

Thus, there is a felt need for a device that alleviates the aforementioned drawbacks.

### OBJECTS

Some of the objects of the present disclosure, which at least one embodiment herein satisfies, are as follows:

An object of the present disclosure is to provide a wave-powered desalinator system.

Another object of the present disclosure is to provide a wave-powered desalinator system that reduces pre-treatment efforts required for desalinating seawater.

Yet another object of the present disclosure is to provide a wave-powered desalinator system that reduces overall energy consumption required for desalinating seawater.

Still another object of the present disclosure is to provide a wave-powered desalinator system that operate efficiently under variable flow from seawater pump.

Another object of the present disclosure is to provide a wave-powered pump that uses energy of sea waves for pumping water.

Another object of the present disclosure is to provide a wave-powered pump that reduces energy consumption required for pumping water.

Yet another object of the present disclosure is to provide a pressure intensifier for a desalinator system that has simple construction and requires less maintenance efforts.

Still another object of the present disclosure is to provide a pressure intensifier for a desalinator system that allows controlling fresh water recovery rate.

Other objects and advantages of the present disclosure will be more apparent from the following description, which is not intended to limit the scope of the present disclosure.

### SUMMARY

According to first aspect of the present invention, a wave-powered desalinator system for desalinating seawater is disclosed. The wave-powered desalinator system comprises, at least a wave-powered pump, a pressure intensifier unit, a reverse osmosis (RO) membrane unit.

The pressure intensifier unit is connected downstream of the wave powered pump/s; the pressure intensifier unit is configured to increase the pressure of the water received from the wave powered pump/s. The reverse osmosis (RO) membrane unit is connected downstream of an outlet of the pressure intensifier unit. The RO membrane unit is configured to convert incoming high-pressure seawater into a desalinated water stream and high-pressure brine. The pressure intensifier unit is configured to utilize the high-pressure brine supplied by RO membrane unit to increase the pressure of seawater in the pressure intensifier unit and discharge a low-pressure brine. The wave-powered pump is configured to at least partially float on seawater and pump the seawater from pump inlet to pump outlet using the energy of waves of the seawater.

In an embodiment of the wave-powered desalinator system, the wave-powered pump/s are attached to a support structure by suitable connection means.

In an embodiment of the wave-powered desalinator system, the support structure is selected from a floating type support structure or a support structure fixed to seabed.

In an embodiment of the wave-powered desalinator system, a pre-filter unit is connected downstream of the wave-powered pump/s. The pre-filter unit is configured to filter water received from the wave-powered pump/s.

In an embodiment of the wave-powered desalinator system, the wave-powered pump is held in place by connecting it with the support structure. The pump comprises, a pump plunger connected to the support structure and the pump plunger comprises a pump outlet provided near an operative top end of the pump plunger. The pump comprises a pump barrel comprising a fluid inlet provided at an operative bottom end of the pump barrel and an operative top end of the pump barrel is slidably connected to the outer periphery of the pump plunger and configured to slide along length of the pump plunger. The pump plunger and the pump barrel are configured to form a pump cavity between the outer periphery of the pump plunger and the inner periphery of the pump barrel. A float is connected to the outer periphery of the pump barrel and configured to move vertically along with the pump barrel. The pump barrel comprises an inlet valve located near the fluid inlet submerged in the fluid, the inlet valve configured to allow entry of the fluid inside the pump cavity and prevent discharge of fluid from the fluid inlet. The pump plunger comprises an outlet valve located near the operative bottom end of the pump plunger; the outlet valve is configured to allow discharge of pumped water from the pump cavity towards the pump outlet.

In an embodiment of the wave-powered desalinator system, the pump comprises a filter screen at the fluid inlet and a self-cleaning mechanism configured to clean the filter screen. The self-cleaning mechanism comprises, a secondary float configured to move vertically relative to the float, at least a support member having one end connected to the secondary float, and a plurality of wiping means connected to other end of the support member. The wiping means projecting towards outer peripheral surface of filter screen and are configured to scrub and clean the filter screen during operative condition.

In an embodiment of the wave-powered desalinator system, the wiping means comprises plurality of rings with outer peripheral edge attached to the support member and inner peripheral edge configured to scrub the filter screen.

In an embodiment of the wave-powered desalinator system, the wiping means comprises plurality of scraper blades with one end of the scraper blade connected to the support member and another end configured to scrub the filter screen.

In an embodiment of the wave-powered desalinator system, the support member is selected from a rod or a pipe.

In an embodiment of the wave-powered desalinator system, the pressure intensifier unit comprises, a first pump cylinder and a second pump cylinder disposed co-axial with the first pump cylinder. The first pump cylinder and the second pump cylinder separated by a spacer. The pressure intensifier unit comprises a first piston configured to slide inside the first pump cylinder and a second pump piston is configured to slide inside the second pump cylinder. Each of the first pump cylinder and second pump cylinder comprises, a seawater inlet port configured to supply low-pressure seawater into the cylinders, a seawater outlet port configured to discharge high pressure seawater out of the cylinder, a brine inlet port configured to supply high-pressure brine into the cylinder, and a brine outlet port configured to discharge low pressure brine out of the cylinder. The pressure intensifier unit comprises, a tie rod is connecting the first side of the first piston with the first side of the second piston. The pressure intensifier unit comprises a first displacer rod is provided at the second side of the first piston and a second displacer rod provided at the second side of the second piston and the diameter of the first displacer rod and second displacer rod is greater than the diameter of the tie rod. In an embodiment of the wave-powered desalinator system, a first bearing seal assembly and second a bearing seal assembly is disposed at first end of the first pump cylinder and the second pump cylinder. The first bearing seal assembly is configured to seal first end of the first pump cylinder and the tie rod, the second bearing seal assembly is configured to seal first end of the second pump cylinder and the tie rod.

In an embodiment of the wave-powered desalinator system, a third bearing seal assembly and fourth bearing seal assembly is disposed at second end of the first pump cylinder and the second pump cylinder. The third bearing seal assembly is configured to seal second end of the first pump cylinder and the first displacer rod, the fourth bearing seal assembly is configured to seal second end of the second pump cylinder and the second displacer rod.

In an embodiment of the wave-powered desalinator system, the first bearing seal assembly, the second bearing seal assembly, the third bearing seal assembly and the fourth bearing seal assembly are configured to be externally accessible.

In an embodiment of the wave-powered desalinator system, the first displacer rod and the second displacer rod are removably installed in the first pump cylinder and the second pump cylinder respectively.

According to the second aspect of the present invention, a wave-powered pump is disclosed. The wave-powered pump is used for pumping fluid using the motion of fluid waves. The wave-powered pump at least partially floating on fluid and held in place by connecting with a support structure. The pump comprises, a pump plunger connected to the support structure and the pump plunger comprises a pump outlet provided near an operative top end of the pump plunger. The pump comprises a pump barrel comprising a fluid inlet provided at an operative bottom end of the pump barrel and an operative top end of the pump barrel is slidably connected to the outer periphery of the pump plunger and configured to slide along length of the pump plunger. The pump plunger and the pump barrel are configured to form a pump cavity between the outer periphery of the pump plunger and the inner periphery of the pump barrel. A float is connected to the outer periphery of the pump barrel and configured to move vertically along with the pump barrel. The pump barrel comprises an inlet valve located near the fluid inlet submerged in the fluid, the inlet valve configured to allow entry of the fluid inside the pump cavity and prevent discharge of fluid from the fluid inlet. The pump plunger comprises an outlet valve located near the operative bottom end of the pump plunger; the outlet valve is configured to allow discharge of pumped water from the pump cavity towards the pump outlet.

According to an embodiment of a wave-powered pump of the present disclosure, the support structure is selected from a floating type support structure or a support structure fixed to seabed.

According to an embodiment of a wave-powered pump of the present disclosure, the pump comprises a filter screen at the fluid inlet and a self-cleaning mechanism configured to clean the filter screen. The self-cleaning mechanism comprises, a secondary float configured to move vertically relative to the float, at least a support member having one end connected to the secondary float, and a plurality of wiping means connected to other end of the support member. The wiping means projecting towards outer peripheral surface of filter screen and are configured to scrub and clean the filter screen during operative condition.

According to an embodiment of a wave-powered pump of the present disclosure, the wiping means comprises plurality of rings with outer peripheral edge attached to the support member and inner peripheral edge configured to scrub the filter screen.

According to an embodiment of a wave-powered pump of the present disclosure, the wiping means comprises plurality of scraper blades with one end of the scraper blade connected to the support member and another end configured to scrub the filter screen.

According to an embodiment of a wave-powered pump of the present disclosure, the support member is selected from a rod or a pipe.

According to third aspect of the present invention, a pressure intensifier unit for desalinator system is disclosed. The desalinator system comprises at least a reverse osmosis (RO) membrane unit configured to convert incoming seawater into a desalinated water stream and high-pressure brine. The pressure intensifier unit comprises, a first pump cylinder and a second pump cylinder disposed co-axial with the first pump cylinder. The first pump cylinder and the second pump cylinder separated by a spacer. The pressure intensifier unit comprises a first piston configured to slide inside the first pump cylinder and a second pump piston is configured to slide inside the second pump cylinder. Each of the first pump cylinder and second pump cylinder comprises, a seawater inlet port configured to supply low-pressure seawater into the cylinders, a seawater outlet port configured to discharge high pressure seawater out of the cylinder, a brine inlet port configured to supply high-pressure brine into the cylinder, and a brine outlet port configured to discharge low pressure brine out of the cylinder. The pressure intensifier unit comprises, a tie rod is connecting the first side of the first piston with the first side of the second piston. The pressure intensifier unit comprises a first displacer rod is provided at the second side of the first piston and a second displacer rod provided at the second side of the second piston and the diameter of the first displacer rod and second displacer rod is greater than the diameter of the tie rod.

According to an embodiment of a pressure intensifier unit of the present disclosure, a first bearing seal assembly and second bearing seal assembly disposed at first end of the first pump cylinder and the second pump cylinder, the first bearing seal assembly configured to seal first end of the first pump cylinder and the tie rod, the second bearing seal assembly configured to seal first end of the second pump cylinder and the tie rod.

According to an embodiment of a pressure intensifier unit of the present disclosure, a third bearing seal assembly and fourth bearing seal assembly disposed at second end of the first pump cylinder and the second pump cylinder, the third bearing seal assembly configured to seal second end of the first pump cylinder and the first displacer rod, the fourth bearing seal assembly configured to seal second end of the second pump cylinder and the second displacer rod.

According to an embodiment of a pressure intensifier unit of the present disclosure, the first bearing seal assembly, the second bearing seal assembly, the third bearing seal assembly and the fourth bearing seal assembly are configured to be externally accessible.

According to an embodiment of a pressure intensifier unit for desalinator system of the present disclosure, the first displacer rod and second displacer rod are removably installed in the first pump cylinder and the second pump cylinder respectively.

### BRIEF DESCRIPTION OF THE ACCOMPANYING DRAWING

A wave-powered desalinator, of the present disclosure will now be described with the help of the accompanying drawing, in which:
**Figure 1A****,** **1B** illustrates the wave-powered desalinator system in accordance with first aspect of the present disclosure.;
**Figure 2** illustrates the wave-powered pump of the wave-powered desalinator system in accordance with second aspect of the present disclosure;
**Figure 3** illustrates the self-cleaning mechanism of the wave-powered desalinator system in accordance with an embodiment of the present disclosure;
**Figure 4** illustrates the pressure intensifier unit of the wave-powered desalinator system in accordance with an embodiment of the present disclosure;
**Figure 5** illustrates the detailed view of the pressure intensifier of figure 4 in accordance with an embodiment of the present disclosure;

### LIST OF REFERENCE NUMERALS

- 100: - wave-powered desalinator system
- 102: - wave-powered pump
- 104: - pre-filter
- 106: - pressure intensifier unit
- 108: - reverse osmosis (RO) membrane unit
- 110: - outlet
- 112: - pump inlet
- 114: - pump outlet
- 118: - pump plunger
- 120: - pump barrel
- 122: - float
- 124: - inlet valve
- 126: - fluid inlet
- 128: - outlet valve
- 130: - filter screen
- 132: - self-cleaning mechanism
- 134: - secondary float
- 136: - support member
- 138: - wiping means
- 140: - first pump cylinder
- 142: - second pump cylinder
- 144: - first piston
- 146: - second piston
- 148: - seawater inlet port
- 150: - seawater inlet port
- 152: - seawater outlet port
- 154: - seawater outlet port
- 156: - brine inlet port
- 158: - brine inlet port
- 160: - brine outlet port
- 162: - brine outlet port
- 164: - tie rod
- 166: - first displacer rod
- 168: - second displacer rod
- 170: - first bearing seal assembly
- 172: - second bearing seal assembly
- 174: - third bearing seal assembly
- 176: - fourth bearing seal assembly
- 178: - first end
- 180: - first end
- 182: - second end
- 184: - second end
- 186: - spacer
- 188: - water level
- 189: - sea
- 190: - elastomeric joint
- 192: - sealing member
- 194: - connection means
- DW: - desalinated water

### DETAILED DESCRIPTION

Embodiments, of the present disclosure, will now be described with reference to the accompanying drawing.

Embodiments are provided so as to thoroughly and fully convey the scope of the present disclosure to the person skilled in the art. Numerous details are set forth, relating to specific components, and methods, to provide a complete understanding of embodiments of the present disclosure. It will be apparent to the person skilled in the art that the details provided in the embodiments should not be construed to limit the scope of the present disclosure. In some embodiments, well-known processes, well-known apparatus structures, and well-known techniques are not described in detail.

The terminology used, in the present disclosure, is only for the purpose of explaining a particular embodiment and such terminology shall not be considered to limit the scope of the present disclosure. As used in the present disclosure, the forms "a," "an," and "the" may be intended to include the plural forms as well, unless the context clearly suggests otherwise. The terms "comprises," "comprising," "including," and "having," are open ended transitional phrases and therefore specify the presence of stated features, integers, operations, elements, modules, units and/or components, but do not forbid the presence or addition of one or more other features, integers, operations, elements, components, and/or groups thereof.

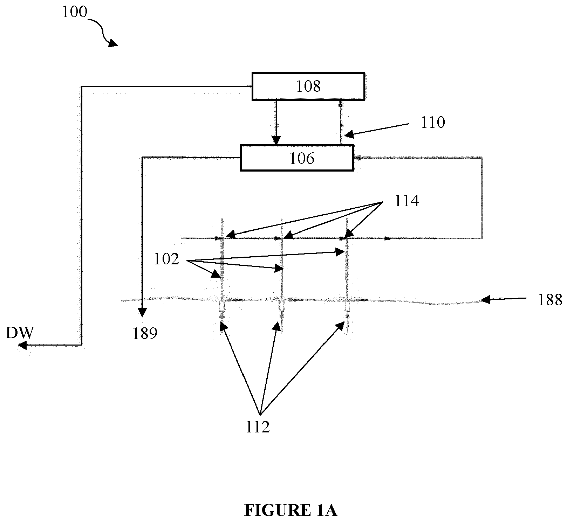

To address the aforementioned drawbacks, the present disclosure discloses a wave-powered desalinator system (hereinafter referred as 100). **Figure 1A** illustrates the wave-powered desalinator system in accordance with first aspect of the present disclosure. According to first aspect of the present invention, a wave-powered desalinator system 100 is disclosed. The wave-powered desalinator system 100 is configured to use motion of seawater for desalination of seawater. The system 100 comprises at least a wave-powered pump 102, at least a pressure intensifier unit 106, at least a reverse osmosis (RO) membrane unit (108).

The pumps 102 are configured to float on the seawater. The pump uses vertical and horizontal motion of the tides to draw the seawater inside the pump and supply the pressurized water. The wave-powered pump/s 102 floating on the seawater are attached to a support structure by a connection means 194. The support structure is configured to keep all the pumps close to each other, so that pressurized sea water may be collected from each pump. The wave-powered pump 102 is held in place by connecting it with the support structure.

In an exemplary embodiment, twenty wave-powered pumps 102 may be connected to a support structure. The seawater pumped by each pump 102 forms a stream which is supplied to pressure intensifier 106.

The pressure intensifier unit 106 is connected to downstream of the wave powered pump/s 102. The pressure intensifier unit 106 is configured to increase the pressure of the water received from the wave powered pump/s 102. The pressurized water is supplied to the reverse osmosis membrane unit.

In an exemplary embodiment, the pressure intensifier unit 106 supplies the seawater to the reverse osmosis membrane unit 108 having pressure range of 40-70 Bar and flow rate of 110-440 Liter/second.

The reverse osmosis (RO) membrane unit 108 is connected to downstream of an outlet 110 of said pressure intensifier unit 106. The RO membrane unit 108 is configured to convert incoming high-pressure seawater into a desalinated water stream (DW) and high-pressure brine.

In an exemplary embodiment, the reverse osmosis membrane unit 108 discharges the desalinated water having a pressure range of 1-3 Bar and flowrate of 11-44 Liters/second, the reverse osmosis membrane unit 108 discharges high pressure brine to the pressure intensifier 106 in a pressure range of 40-70 Bar and flowrate of 99-396 Liters/second.

Further, the pressure intensifier unit 106 is configured to utilize high-pressure brine supplied by RO membrane unit 108 to increase the pressure of seawater and discharge a low-pressure brine. In an exemplary embodiment, the pressure intensifier unit 106 discharges a low-pressure brine to the sea having a pressure range of 0.5-1.5 Bar and a flowrate of 99-396 Liters/second.

In an exemplary embodiment, the wave powered desalinator system 100 may include twenty-eight pressure vessels of 16-inch diameter. Each pressure vessel includes two seawater reverse osmosis (SWRO) membranes. The length of a SWRO membrane is 40 inch and diameter is 16 inch. All pressure vessels are connected in parallel arrangement and in single pass. All pressure vessels are fluidly connected to each other using pipes. Pressure vessels are installed on a steel frame and offers easy assembly and disassembly.

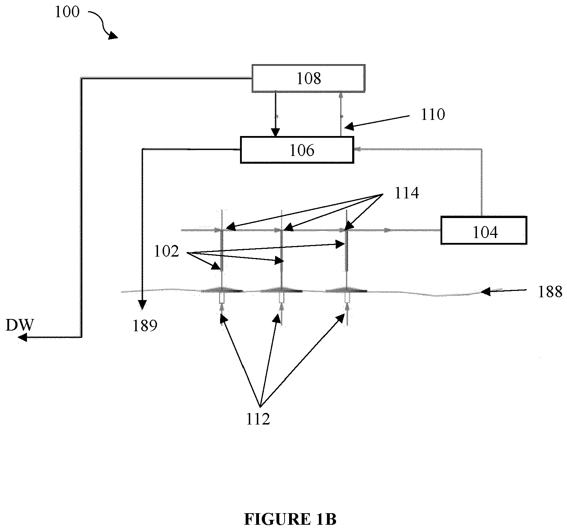

In an exemplary embodiment as shown in figure 1B, the seawater pumped by each pump 102 forms a stream, which is supplied to a pre-filter 104 having pressure range of 12-18 Bar and the flow rate in the range of 110 to 130 Liter/second. The pre-filter unit 104 is connected to downstream of wave-powered pump/s 102. The pre-filter unit is in fluid communication with wave powered pumps. The pre-filter unit 104 is configured to remove the solid particle, contaminants from the water received from each wave-powered pump/s 102. The pressure of seawater passed through the pre-filter unit is less than the pressure required for desalination in the reverse osmosis membrane unit. Hence, the water filtered in the pre-filter unit is supplied to the pressure intensifier. In an exemplary embodiment, the pre-filter unit 104 supplies the filtered seawater to pressure intensifier unit 106 having a pressure range of 11- 17 Bar and flowrate in range of 110 -130 Liter/second.

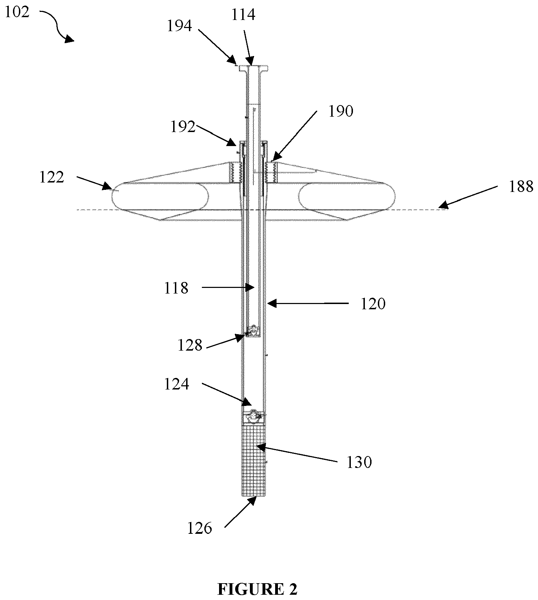

**Figure 2** illustrates the wave-powered pump of the wave-powered desalinator system in accordance with second aspect of the present disclosure. According to the second aspect of the present invention, the wave-powered pump 102 is disclosed. The wave-powered pump 102 comprises a pump plunger 118, a pump barrel 120, a float 122. The wave-powered pump 102 is configured to at least partially float on seawater and pump the seawater from pump inlet 112 to pump outlet 114 using the motion of waves of the seawater.

The pump plunger 118 is connected to the support structure and comprises a pump outlet 114 provided near an operative top end of the pump plunger 118.

In an embodiment, the support structure is selected from a floating type support structure or a support structure fixed to seabed. The floating type support structure is configured to float on the seawater.

The pump barrel 120 comprises a fluid inlet 126 provided at an operative bottom end of the pump barrel 120. An operative top end of the pump barrel 120 is slidably connected to the outer periphery of the pump plunger 118 and is configured to slide along length of the pump plunger 118.

A sealing member 192 is disposed at the operative top end of the pump plunger 118 and the pump barrel 120.

The pump barrel 120 comprises an inlet valve 124 located near the fluid inlet 126 submerged in the fluid and the inlet valve 124 is configured to allow entry of the fluid inside pump cavity and prevent discharge of fluid from the fluid inlet 126.

The pump plunger 118 and the pump barrel 120 are configured to form a pump cavity between the outer periphery of the pump plunger 118 and the inner periphery of the pump barrel 120.

The pump plunger 118 comprises an outlet valve 128 located near the operative bottom end of the pump plunger 118. The outlet valve 128 is configured to allow discharge of pumped water from the pump cavity towards the pump outlet 114. The float 122 is connected to the outer periphery of the pump barrel 120 using an elastomeric joint 190. The elastomeric joint 190 allows limited rotation so that the float aligns itself to the slope of the incoming wave. The float is configured to float on the seawater enabling other components of pump to float on the seawater. The float is configured to move vertically along with the pump barrel 120.

In an embodiment, the float 122 is made of water-resistant material.

The pump barrel 120 comprises a filter screen 130 at the fluid inlet 126. The filter screen is configured to prevent the entry of undesired solid objects in the pump barrel, otherwise these solid objects may damage the pump structure. During the operation of the pump, the solid objects may get trapped in the filter screen. To clean the filter screen 130, a self-cleaning mechanism is provided.

Since the fluid inlet 126 provided at an operative bottom end of the pump barrel 120, it is submerged well below from fluid surface level. Fluid available at depth is cleaner than fluid at surface level. Further, since the fluid inlet 126 is submerged in fluid it is self-priming. The pump plunger 118 serves a dual purpose of pressurizing fluid as well as providing flow path towards outlet through its inner hollow structure. This reduces number of parts and complexity of wave powered pump.

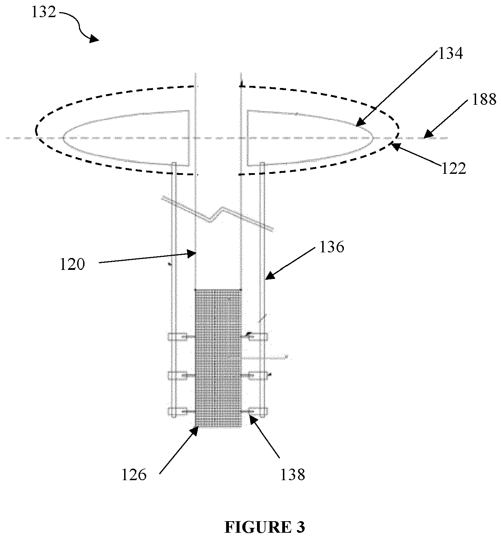

**Figure 3** illustrates the self-cleaning mechanism of the wave-powered desalinator system in accordance with an embodiment of the present disclosure;

The self-cleaning mechanism 132 comprises, a secondary float 134, at least a support member 136, and a plurality of wiping means 138.

The secondary float 134 is connected to the float 122 using a connecting means. The secondary float 134 is configured to move vertically relative to the float 122.

In an embodiment, the secondary float 134 is made of water-resistant material.

The support member is long structure having one end connected to the secondary float 134. At the other end of the support member 136 a plurality of wiping means 138 are connected. Wiping means are configured to project towards the outer surface of the filter screen 130.

In an embodiment, the support member 136 is selected from a rod or a pipe.

The wiping means 138 are configured to scrub and clean the filter screen 130 during operative condition of the wave powered pump. The wiping means 138 comprises a plurality of rings with outer peripheral edge attached to the support member 136, and inner peripheral edge is configured to scrub the filter screen 130.

In an embodiment, the wiping means 138 comprises plurality of scraper blades with one end of said scraper blade connected to the support member 136 and another end is configured to scrub the filter screen 130.

The self-cleaning mechanism 132, reduces frequent maintenance and cleaning of filter screen.

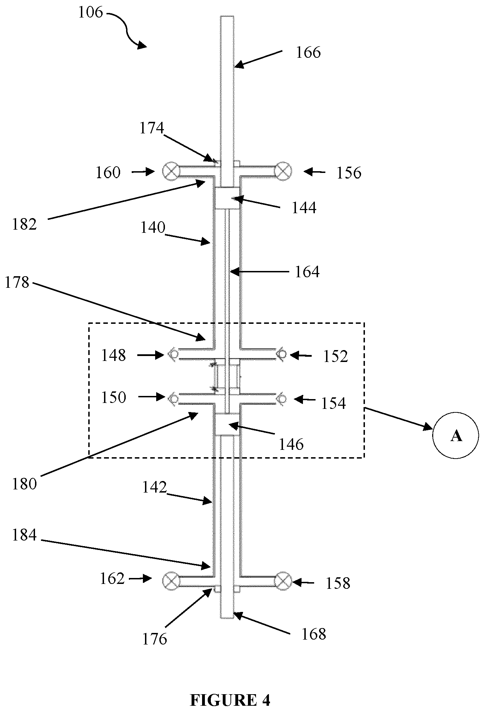

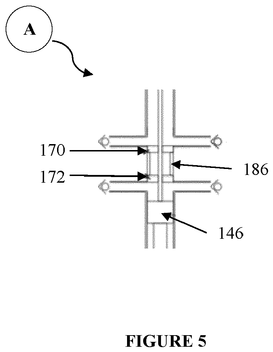

The wave powered pumps is in fluid communication with the pressure intensifier unit 106. The pressure intensifier unit 106 according to the third aspect of the present invention, is shown in **figure 4** and **figure 5****.**

The pressure intensifier unit 106 comprises a first pump cylinder 140 and a second pump cylinder 142 disposed co-axial with the first pump cylinder 140. The first pump cylinder 140 and the second pump cylinder 142 are separated by a spacer 186. The first pump cylinder 140 is in fluid communication with the second pump cylinder 142.

The first pump cylinder 140 accommodates a first piston 144 that is configured to slide inside the first pump cylinder 140. The second pump cylinder 142 accommodates a second pump piston 146 that is configured to slide inside the second pump cylinder 142. A tie rod 164 is provided to connect the first side of the first piston 144 with the first side of the second piston 146.

Each of the first pump cylinder 140 and the second pump cylinder 142 comprises a seawater inlet port 148,150. The low-pressure seawater supplied by the wave powered pump/s 102 enters cylinders 140,142 through seawater inlet port 148,150 respectively.

Each of the first pump cylinder 140 and the second pump cylinder 142 comprises a seawater outlet port 152,154. The high-pressure seawater is discharged out of the cylinders 140,142 through seawater outlet port 152,154.

Further, each of the first pump cylinder 140 and the second pump cylinder 142 comprises a brine inlet port 156, 158. The high-pressure brine discharged by the RO membrane unit is supplied into cylinders 140,142 through a brine inlet port 156, 158.

The energy of the high-pressure brine is used to increase the pressure of sea water in the pressure intensifier, resulting in reduction in pressure of the brine. Thus, pressure intensifier acts as energy recovery device that utilizes energy of high pressure brine for increasing pressure of seawater.

The low-pressure brine is discharged out of cylinders 140,142 through a brine outlet port 160,162.

A check valve is disposed at each seawater inlet port 148,150 and each seawater outlet port 152,154.

A control valve is disposed at each brine inlet port 156, 158 and each brine outlet port 160,162 to control the flow of brine entering and escaping cylinders 140,142.

The high-pressure brine discharged by the RO membrane unit 108 enters the first pump cylinder 140 through brine inlet port 156, causing movement of the first piston 144 from the second end 182 to a first end 178 and the second piston 146 from the first end 180 to the second end 184. The movement of the first piston 144 causes pressurized seawater inside first cylinder pump 140 to be discharged through seawater outlet port 152. At the same time the brine in second pump cylinder 142 is discharged through brine outlet port 162, while allowing entry of seawater inside second pump cylinder

Further, the high-pressure brine discharged by the RO membrane unit 108 enters the second pump cylinder 142 through brine inlet port 158, causing movement of the first piston 144 form first end 180 to the second end 182 and the second piston 146 from the second end 184 to the first end 180. The movement of the second piston 146 causes pressurized seawater inside second pump cylinder 142 to be discharged through seawater outlet port 154. At the same time the brine in the first pump cylinder 140 is discharged through brine outlet port 160, while allowing entry of seawater inside the first pump cylinder 140.

A first displacer rod 166 is provided at the second side of the first piston 144 and a second displacer rod 168 is provided at the second side of the second piston 146 and the diameter of the first displacer rod 166 and the second displacer rod 168 is greater than the diameter of the tie rod 164.

In an embodiment, the first displacer rod 166 and the second displacer rod 168 are removably installed in the first pump cylinder 140 and the second pump cylinder 142 respectively.

The diameter of each displacer rod 166, 168 affects the effective area of the piston 144,146 on which brine exerts pressure. The effective area of the piston 144,146 governs the fresh water recovery rate. Hence by selecting displacer rod 166,168 of appropriate diameter, the fresh water recovery rate can be controlled as per the requirement.

In an exemplary embodiment, cylinders 140, 142 may have a stroke length of 3 meters.

A first bearing seal assembly 170 and a second a bearing seal assembly 172 is disposed at the first end 178,180 of the first pump cylinder 140 and the second pump cylinder 142 respectively. The first bearing seal assembly 170 is configured to seal the first end 178 of the first pump cylinder 140 and the tie rod 164. The second bearing seal assembly 172 is configured to seal the first end 180 of the second pump cylinder 142 and the tie rod 164.

A third bearing seal assembly 174 and a fourth bearing seal assembly 176 is disposed at the second end 182,184 of the first pump cylinder 140 and the second pump cylinder 142 respectively. The third bearing seal assembly 174 is configured to seal the second end 182 of the first pump cylinder 140 and the first displacer rod 166. The second bearing seal assembly 172 is configured to seal the second end 184 of the second pump cylinder 142 and the second displacer rod 168.

The first bearing seal assembly 170, the second bearing seal assembly 172, the third bearing seal assembly 174 and the fourth bearing seal assembly 176 are packing gland type seals. The packing gland type seals allow replacement of split ring seals for maintenance without disassembly, which makes the bearing assembly 170,172,174 and 176 externally accessible.

The externally accessible arrangement of the bearing seal assemblies 170, 172,174,176 reduces the steps required in maintenance process, hence reducing maintenance time.

In an exemplary embodiment, the length of the pressure intensifier unit 106 may be 12 meters.

The desalinator system uses cylindrical barrels in wave-powered pump 102, pressure vessels of RO membrane unit 108 and cylinders 140,142 of pressure intensifier unit 106. To reduce complexity of design, these cylindrical barrels are designed to have same diameter but different length as per the requirement.

In a preferred embodiment the cylindrical barrel is filament wound composite barrel.

In another embodiment, the cylindrical barrel may be made of corrosion resistant material such as stainless steel, copper etc.

In an exemplary embodiment, cylindrical barrel is designed to have inner diameter of 16 inch and pressure rating of 60 Bar.

In an exemplary embodiment, in an operative configuration of the wave-powered desalinator system 100 includes array of twenty pumps. The feed water flow from pumps 102, is nominally 830 cubic meter per hour, (400 m³/h min.- 1600 m³/h max.). The permeate (fresh water) recovery rate is 10%. The single membrane recovery rate is 5%. Fresh water recovery rate is controlled by changing the pressure intensifier design. Feed pressure varies according to the feed flow between 30 and 60 Bar. Fouling resistant type SWRO membranes are selected and thicker feed spacer is used.

The foregoing description of the embodiments has been provided for purposes of illustration and not intended to limit the scope of the present disclosure. Individual components of a particular embodiment are generally not limited to that particular embodiment, but are interchangeable. Such variations are not to be regarded as a departure from the present disclosure, and all such modifications are considered to be within the scope of the present disclosure.

### TECHNICAL ADVANCEMENTS

The present disclosure described herein above has several technical advantages including, but not limited to, the realization of the wave-powered desalinator system, that:
reduces pretreatment efforts of seawater;
offers low electricity consumption;
operates efficiently under variable inflow; and
offers better control over recovery rate.

The present disclosure described herein above has several technical advantages including, but not limited to, the realization of the wave-powered pump, that:
offers low electricity consumption;
uses renewable energy source
does not need priming
has self-cleaning mechanism that automatically cleans inlet screen
requires less maintenance

The present disclosure described herein above has several technical advantages including, but not limited to, the realization of the pressure intensifier, that:
provides simple construction.;
requires less maintenance efforts; and
allows controlling fresh water recovery rate.

The embodiments herein, the various features, and advantageous details thereof are explained with reference to the non-limiting embodiments in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

The foregoing description of the specific embodiments so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the embodiments as described herein.

The use of the expression "at least" or "at least one" suggests the use of one or more elements or ingredients or quantities, as the use may be in the embodiment of the disclosure to achieve one or more of the desired objects or results.

Any discussion of documents, acts, materials, devices, articles or the like that has been included in this specification is solely for the purpose of providing a context for the disclosure. It is not to be taken as an admission that any or all of these matters form a part of the prior art base or were common general knowledge in the field relevant to the disclosure as it existed anywhere before the priority date of this application.

The numerical values mentioned for the various physical parameters, dimensions or quantities are only approximations and it is envisaged that the values higher/lower than the numerical values assigned to the parameters, dimensions or quantities fall within the scope of the disclosure, unless there is a statement in the specification specific to the contrary.

While considerable emphasis has been placed herein on the components and component parts of the preferred embodiments, it will be appreciated that many embodiments can be made and that many changes can be made in the preferred embodiments without departing from the principles of the disclosure. These and other changes in the preferred embodiment as well as other embodiments of the disclosure will be apparent to those skilled in the art from the disclosure herein, whereby it is to be distinctly understood that the foregoing descriptive matter is to be interpreted merely as illustrative of the disclosure and not as a limitation.

## Claims

1. A wave-powered desalinator system (100) for desalinating seawater, comprising:
- at least a wave-powered pump (102);
- a pressure intensifier unit (106) connected downstream of said wave-powered pump/s (102), said pressure intensifier unit (106) configured to increase the pressure of the water received from said wave-powered pump/s (102);
- a reverse osmosis (RO) membrane unit (108) connected downstream of an outlet (110) of said pressure intensifier unit (106), said RO membrane unit (108) configured to convert incoming high-pressure seawater into a desalinated water stream (DW) and high-pressure brine;
- said pressure intensifier unit (106) configured to utilize said high-pressure brine supplied by RO membrane unit (108) to increase the pressure of seawater in said pressure intensifier unit (106) and discharge a low-pressure brine;
wherein, said wave-powered pump (102) configured to at least partially float on seawater and pump the seawater from pump inlet (112) to pump outlet (114) using the energy of waves of the seawater.

2. The wave-powered desalinator system (100) as claimed in claim 1, said wave-powered pump/s (102) are attached to a support structure.

3. The wave-powered desalinator system (100) as claimed in claim 2, said support structure is selected from a floating type support structure or a support structure fixed to seabed.

4. The wave-powered desalinator system (100) as claimed in claim 1, wherein a pre-filter unit (104) is connected downstream of said wave-powered pump/s (102), said pre-filter unit (104) is configured to filter water received from said wave-powered pump/s (102);

5. The wave-powered desalinator system (100) as claimed in claim 1, wherein said wave-powered pump (102) is held in place by connecting it with said support structure, said pump (102) comprising:
- a pump plunger (118) connected to said support structure and comprising a pump outlet (114) provided near an operative top end of said pump plunger (118);
- a pump barrel (120) comprising a fluid inlet (126) provided at an operative bottom end of said pump barrel (120) and an operative top end of said pump barrel (120) slidably connected to the outer periphery of said pump plunger (118) and configured to slide along length of said pump plunger (118);
- said pump plunger (118) and said pump barrel (120) are configured to form a pump cavity between the outer periphery of said pump plunger (118) and the inner periphery of said pump barrel (120);
- a float (122) connected to the outer periphery of said pump barrel (120) and configured to move vertically along with said pump barrel (120);
- said pump barrel (120) comprises an inlet valve (124) located near said fluid inlet (126) submerged in the fluid, said inlet valve (124) configured to allow entry of the fluid inside said pump cavity and prevent discharge of fluid from said fluid inlet (126);
- said pump plunger (118) comprises an outlet valve (128) located near the operative bottom end of said pump plunger (118), said outlet valve (128) configured to allow discharge of pumped water from said pump cavity towards said pump outlet (114);

6. The wave-powered desalinator system (100) as claimed in claim 5, said pump (102) comprises a filter screen (130) at said fluid inlet (126) and a self-cleaning mechanism (132) configured to clean said filter screen (130); said self-cleaning mechanism (132) comprises:
- a secondary float (134) configured to move vertically relative to said float (122),
- at least a support member (136) having one end connected to said secondary float (134), and
- plurality of wiping means (138) connected to other end of said support member (136), projecting towards outer peripheral surface of said filter screen (130), said wiping means (138) configured to scrub and clean said filter screen (130) during operative condition.

7. The wave-powered desalinator system (100) as claimed claim 6, wherein said wiping means (138) comprises plurality of rings with outer peripheral edge attached to said support member (136); and inner peripheral edge configured to scrub said filter screen (130).

8. The wave-powered desalinator system (100) as claimed claim 6, said wiping means (138) comprises plurality of scraper blades with one end of said scraper blade connected to said support member (136) and another end configured to scrub said filter screen (130).

9. The wave-powered desalinator system (100) as claimed in claim 6, said support member (136) is selected from a rod or a pipe.

10. The wave-powered desalinator system (100) as claimed in claim 1, said pressure intensifier unit (106) comprising:
- a first pump cylinder (140) and a second pump cylinder (142) disposed co-axial with said first pump cylinder (140) and said first pump cylinder (140) and said second pump cylinder (142) separated by a spacer (186);
- a first piston (144) configured to slide inside said first pump cylinder (140) and a second pump piston (146) configured to slide inside said second pump cylinder (142);
- each of said first pump cylinder (140) and second pump cylinder (142) comprises:
∘ a seawater inlet port (148,150) configured to supply low-pressure seawater into said cylinders (140,142),
∘ a seawater outlet port (152,154) configured to discharge high pressure seawater out of said cylinder (140,142),
∘ a brine inlet port (156, 158) configured to supply high-pressure brine into said cylinder (140,142), and
∘ a brine outlet port (160,162) configured to discharge low pressure brine out of said cylinder (140,142).
- a tie rod (164) connecting the first side of said first piston (144) with the first side of said second piston (146);
- a first displacer rod (166) provided at the second side of said first piston (144) and a second displacer rod (168) provided at the second side of said second piston (146) and the diameter of said first displacer rod (166) and second displacer rod (168) is greater than the diameter of said tie rod (164).

11. The wave-powered desalinator system (100) as claimed in claim 10, a first bearing seal assembly (170) and a second a bearing seal assembly (172) disposed at a first end (178,180) of said first pump cylinder (140) and said second pump cylinder (142), said first bearing seal assembly (170) configured to seal said first end (178) of said first pump cylinder (140) and said tie rod (164), said second bearing seal assembly (172) configured to seal said first end (180) of said second pump cylinder (142) and said tie rod (164).

12. The wave-powered desalinator system (100) as claimed in claim 10, a third bearing seal assembly (174) and a fourth bearing seal assembly (176) disposed at a second end (182,184) of said first pump cylinder (140) and said second pump cylinder (142), said third bearing seal assembly (174) configured to seal said second end (182) of said first pump cylinder (140) and said first displacer rod (166), said fourth bearing seal assembly (172) configured to seal the second end (184) of said second pump cylinder (142) and said second displacer rod (168).

13. The wave-powered desalinator system (100) as claimed in claim 11 and 12, said first bearing seal assembly (170), said second bearing seal assembly (172), said third bearing seal assembly (174) and said fourth bearing seal assembly (176) are configured to be externally accessible.

14. The wave-powered desalinator system (100) as claimed in claim 10, said first displacer rod (166) and said second displacer rod (168) are removably installed in the said first pump cylinder (140) and said second pump cylinder (142) respectively.

15. A wave-powered pump (102) for pumping fluid using the motion of fluid waves, said wave-powered pump (102) at least partially floating on fluid and held in place by connecting with a support structure, said pump comprising:
- a pump plunger (118) connected to said support structure and comprising a pump outlet (114) provided near an operative top end of said pump plunger (118);
- a pump barrel (120) comprising a fluid inlet (126) provided at an operative bottom end of said pump barrel (120) and an operative top end of said pump barrel (120) slidably connected to the outer periphery of said pump plunger (118) and configured to slide along length of said pump plunger (118);
- said pump plunger (118) and said pump barrel (120) are configured to form a pump cavity between the outer periphery of said pump plunger (118) and the inner periphery of said pump barrel (120);
- a float (122) connected to the outer periphery of said pump barrel (120) and configured to move vertically along with said pump barrel (120);
- said pump barrel (120) comprises an inlet valve (124) located near said fluid inlet (126) submerged in the fluid, said inlet valve (124) configured to allow entry of the fluid inside said pump cavity and prevent discharge of fluid from said fluid inlet (126);
- said pump plunger (118) comprises an outlet valve (128) located near the operative bottom end of said pump plunger (118), said outlet valve (128) configured to allow discharge of pumped water from said pump cavity towards said pump outlet (114);

16. The wave-powered pump (102) as claimed in claim 15, said support structure is selected from a floating type support structure or a support structure fixed to seabed.

17. The wave-powered pump (102) as claimed in claim 15, said pump (102) comprises a filter screen (130) at said fluid inlet (126) and a self-cleaning mechanism (132) configured to clean said filter screen (130); said self-cleaning mechanism (132) comprises:
- a secondary float (134) configured to move vertically relative to said float (122),
- at least a support member (136) having one end connected to said secondary float (134), and
- plurality of wiping means (138) connected to other end of said support member (136), projecting towards outer peripheral surface of said filter screen (130), said wiping means (138) configured to scrub and clean said filter screen (130) during operative condition.

18. The wave-powered pump (102) as claimed in claim 17, said wiping means (138) comprises plurality of rings with outer peripheral edge attached to said support member (136) and inner peripheral edge configured to scrub said filter screen (130).

19. The wave-powered pump (102) as claimed in claim 17, said wiping means (138) comprises plurality of scraper blades with one end of said scraper blade connected to said support member (136) and another end configured to scrub said filter screen (130).

20. The wave-powered pump (102) as claimed in claim 17, said support member (136) is selected from a rod or a pipe.

21. A pressure intensifier unit (106) for desalinator system (100), said desalinator system (100) comprises at least a reverse osmosis (RO) membrane unit (108) configured to convert incoming seawater into a desalinated water stream (DW) and high-pressure brine, said pressure intensifier unit (106) comprising :
- a first pump cylinder (140) and a second pump cylinder (142) disposed co-axial with said first pump cylinder (140) and said first pump cylinder (140) and said second pump cylinder (142) separated by a spacer (186);
- a first piston (144) configured to slide inside said first pump cylinder (140) and a second piston (146) configured to slide inside said second pump cylinder (142);
- each of said first pump cylinder (140) and second pump cylinder (142) comprises:
∘ a seawater inlet port (148,150) configured to supply low-pressure seawater into said cylinders (140,142),
∘ a seawater outlet port (152, 154) configured to discharge high pressure seawater out of said cylinders (140,142),
∘ a brine inlet port (156, 158) configured to supply high-pressure brine into said cylinder (140,142), and
∘ a brine outlet port (160,162) configured to discharge low pressure brine out of said cylinder (140,142).
- a tie rod (164) connecting the first side of said first piston (144) with the first side of said second piston (146);
- a first displacer rod (166) provided at the second side of said first piston (144) and a second displacer rod (168) provided at the second side of said second piston (146) and the diameter of said first displacer rod (166) and said second displacer rod (168) is greater than the diameter of said tie rod (164).

22. The pressure intensifier unit (106) as claimed in claim 21, a first bearing seal assembly (170) and a second bearing seal assembly (172) disposed at first end of said first pump cylinder (140) and said second pump cylinder (142), said first bearing seal assembly (170) configured to seal first end of said first pump cylinder (140) and said tie rod (164), said second bearing seal assembly (172) configured to seal first end of said second pump cylinder (142) and said tie rod (164).

23. The pressure intensifier unit (106) as claimed in claim 21, a third bearing seal assembly (174) and a fourth bearing seal assembly (176) disposed at a second end (182,184) of said first pump cylinder (140) and said second pump cylinder (142), said third bearing seal assembly (174) configured to seal said second end (182) of said first pump cylinder (140) and said first displacer rod (166), said fourth bearing seal assembly (176) configured to seal said second end (184) of said second pump cylinder (142) and said second displacer rod.

24. The pressure intensifier unit (106) as claimed in claim 22 and 23, said first bearing seal assembly (170), said second bearing seal assembly (172), said third bearing seal assembly (174) and said fourth bearing seal assembly (176) are configured to be externally accessible.

25. The pressure intensifier unit (106) as claimed in claim 21 said first displacer rod (166) and second displacer rod are removably installed in the said first pump cylinder (140) and said second pump cylinder (142) respectively.
